# EUROPÄISCHE PATENTSCHRIFT

(11) **EP 1 236 936 B1**
(45) Veröffentlichungstag und Bekanntmachung des Hinweises auf die Patenterteilung: **17.08.2005**
(21) Anmeldenummer: 02001142.5
(22) Anmeldetag: 25.01.2002
(51) Int. Cl.: F16H 63/36

(54) **Schaltsperrvorrichtung**
Shift lock mechanism
Mécanisme de verrouillage pour commande de changement de vitesse

(30) Priorität: 28.02.2001 DE 10109645
(43) Veröffentlichungstag der Anmeldung: 04.09.2002
(73) Patentinhaber: Volkswagen Aktiengesellschaft, 38436 Wolfsburg (DE)
(72) Erfinder: Damm, Ansgar, Dr., 38518 Gifhorn (DE); Felske, Andreas, 38104 Braunschweig (DE); Schreiber, Wolfgang, Dr., 38550 Isenbüttel (DE)

(56) Entgegenhaltungen:
- DE-A- 19 653 172
- DE-A- 19 843 584
- GB-A- 774 824

## Beschreibung

Die Erfindung betrifft eine Schaltsperrvorrichtung, insbesondere zur Gangschaltsperrung mechanisch schaltbarer Kraftfahrzeuggetriebe, mit einem formschlüssig wirksamen Sperrelement, das durch eine durch das Einlegen eines Gangs bedingte Wechselwirkung mit einer Steuerfläche einer dem Gang zugeordneten Schaltstange zur Sperrung mindestens eines einer anderen Schaltstange zugeordneten anderen Gangs in eine Vertiefung der anderen Schaltstange in Eingriff bringbar ist.

Das gleichzeitige Einlegen von zwei Gängen eines einfachen, d.h. mit einer einzigen Getriebeeingangswelle und einer einzigen Motorkupplung versehenen Stufenschaltgetriebes würde zu einem Blockieren des Getriebes führen und sollte daher konstruktiv verhindert werden. Bei manuell und automatisiert schaltbaren Stufenschaltgetrieben, die über eine Schaltwelle und mehrere Schaltstangen betätigbar ausgebildet sind, ist das gleichzeitige Einlegen von zwei Gängen dadurch unmöglich, dass bei einem Wechsel von einem Gang in einen anderen, derselben Schaltstange zugeordneten Gang der eine Gang durch die Verschiebung der Schaltstange zwangsläufig ausgelegt wird, und dass bei einem Wechsel von einem Gang in einen anderen, einer anderen Schaltstange zugeordneten Gang, der Wechsel der Verbindung der Schaltwelle von der einen Schaltstange zu der anderen Schaltstange, d.h. der den Wechsel der Schaltgasse bewirkende Wählvorgang, nur möglich ist, wenn sich die Schaltstangen in ihrer Neutralposition befinden, d.h. alle Gänge ausgelegt sind. Bei einem Doppelkupplungsgetriebe, das eine erste Motorkupplung, eine erste Getriebeeingangswelle, und eine erste Gruppe von Gängen aufweist, die ein erstes Teilgetriebe bilden, und das eine zweite Motorkupplung, eine zweite Getriebeeingangswelle, und eine zweite Gruppe von Gängen aufweist, die ein zweites Teilgetriebe bilden, würde das gleichzeitige Einlegen von zwei demselben Teilgetriebe zugeordneten Gängen ebenfalls zu einem Blockieren des Getriebes führen. Dagegen sind bei einem üblichen Schaltvorgang des Doppelkupplungsgetriebes, d.h. bei einem Gangwechsel von einem dem einen Teilgetriebe zugeordneten einen Gang in einen dem anderen Teilgetriebe zugeordneten anderen Gang, vorübergehend beide Gänge gleichzeitig eingelegt, und der eigentliche Schaltvorgang, d.h. die Übertragung des Antriebsdrehmomentes von dem einen auf den anderen Gang, erfolgt durch ein überschnitten gesteuertes Öffnen der dem einen Gang zugeordneten Motorkupplung und Schließen der dem anderen Gang zugeordneten Motorkupplung. Im Gegensatz dazu sollte das gleichzeitige Einlegen von zwei demselben Teilgetriebe zugeordneten Gängen zuverlässig verhindert werden, was, ähnlich wie zuvor für das einfache Stufenschaltgetriebe beschrieben, in jedem Teilgetriebe durch die Verwendung einer separaten, mit den zugeordneten Schaltstangen koppelbaren Schaltwelle pro Teilgetriebe erreicht werden kann.

Alternativ ist es jedoch auch möglich, einfache Stufenschaltgetriebe mit jeweils unmittelbar auf jede der Schaltstangen wirksamen Stellantrieben automatisiert schaltbar auszubilden. Desgleichen können Doppelkupplungsgetriebe, die aufgrund ihrer mechanischen Komplexität zumeist ohnehin automatisiert schaltbar sind, mit unmittelbar auf die Schaltstangen wirksamen Stellantrieben versehen sein oder über eine einzige, mit den Schaltstangen beider Teilgetriebe koppelbaren Schaltwelle betätigbar ausgebildet sein. In diesen Fällen ist das gleichzeitige Einlegen von zwei Gängen des Getriebes bzw. eines Teilgetriebes mechanisch möglich und sollte aus Sicherheitsgründen, zusätzlich zu entsprechenden Schutzfunktionen in der Schaltsteuerung, mittels einer speziellen mechanisch wirksamen Schaltsperrvorrichtung verhindert werden.

Hierfür verwendbare Vorrichtungen sind in unterschiedlicher Ausbildung und Anordnung bekannt.

Beispielsweise ist in der GB PS 774,824 ein Sperrmechanismus für ein Gangwechselgetriebe angegeben, das einen Kipphebel aufweist, durch den wechselweise eine von zwei auf einer unbeweglichen Schaltstange axialverschiebbar gelagerte Schaltgabeln durch eine schaltungsbedingte Verschiebung der jeweils anderen Schaltgabel in einer Neutralposition arretierbar ist. In modifizierter Ausbildung und Anordnung ist dieser Kipphebel auch zur wechselseitigen Arretierung von zwei axialbeweglichen Schaltstangen mit jeweils einer starr befestigten Schaltgabel geeignet. In diesem Fall wäre der Kipphebel quer zu den Schaltstangen angeordnet und müsste zur Abstützung der auftretenden Querkräfte mit gehäusefesten Bauteilen, wie Stegen und Rippen, in Kontakt stehen, um eine durch Lagerspiel und elastische Verformungen bedingte Verklemmung mit den Schaltstangen zu vermeiden. Daraus ergeben sich aufgrund erhöhter Reibung nachteilig hohe Betätigungs- bzw. Schaltkräfte, die auch starken Verschleiss zur Folge haben. Des weiteren ist der für den Kipphebel selbst, den Schwenkraum des Kipphebels, und die für die Abstützung benötigten gehäusefesten Bauteile erforderliche große Bauraum von Nachteil.

Aus der DE 37 30 230 C1 ist eine Einrichtung zum Verriegeln von Gängen eines Kraftfahrzeug-Stufengetriebes bekannt, bei der eine Verriegelungsplatte vorgesehen ist, die in einer Radialebene quer zu mehreren Schaltstangen angeordnet ist, und die mit jeweils drei geneigte Sperrkanten aufweisenden Aussparungen in Nuten der Schaltstangen geführt ist. Durch das schaltungsbedingte Verschieben einer der Schaltstangen wird die Verriegelungsplatte durch eine Wechselwirkung von zwei senkrecht zueinander liegenden Sperrkanten mit dem Rand der betreffenden Nut derart in der Radialebene verschoben, dass jeweils eine Sperrkante der anderen Aussparungen in die jeweils zugeordnete Nut der anderen Schaltstangen eingreift, wodurch die anderen Gänge formschlüssig gesperrt sind. Durch diese Einrichtung können auch entfernt voneinander angeordnete Schaltstangen wechselseitig gesperrt werden. Auch ist von Vorteil, dass der erforderliche Bewegungsraum der Verriegelungsplatte gering ist. Nachteilig an der bekannten Einrichtung ist jedoch, dass die als Querkräfte auf die Verriegelungsplatte wirksamen Sperrkräfte durch gehäusefeste Bauteile, die im vorliegenden Fall als Führungslager der Schaltstangen ausgebildet sind, aufgenommen werden müssen, um eine Verklemmung zwischen der Verriegelungsplatte und den Schaltstangen zu vermeiden. Dies hat eine erhöhte Reibung zur Folge, die zu hohen Schalt- bzw. Betätigungskräften und demzufolge zu erhöhtem Verschleiss führt. Darüber hinaus ist die Montage der miteinander in Eingriff befindlichen Schaltstangen und der Verriegelungsplatte sehr kompliziert.

Schließlich ist in der DE 196 53 172 A1, die alle Merkmale des Oberbegriffs des unabhängigen Anspruchs 1, eine Schaltsperreinrichtung für ein Zahnräder-Wechselgetriebe offenbart, das mit mindestens einem in zwei Schaltstangen formschlüssig eingreifenden und von diesen verschiebbaren Sperrglied versehen ist. Das Sperrglied ist als ein zwischen den Schaltstangen angeordnetes Sperrblech ausgebildet, das zum wechselseitigen Eingriff in Sperrnuten der Schaltstangen quer zu diesen schwenkbar gelagert ist. Durch eine schaltungsbedingte Verschiebung einer der Schaltstangen wird das Sperrblech durch eine Wechselwirkung mit einer Steuerkante der zugeordneten Sperrnut in die Sperrnut der anderen Schaltstange geschwenkt, wodurch die zugeordneten Gänge formschlüssig gegen ein Einlegen gesichert sind. Durch eine Verwendung mehrerer derartiger Sperrkörper, die über Anschlagflächen miteinander in Wechselwirkung treten können, ist eine formschlüssige Arretierung mehrerer Schaltstangen möglich. Nachteilig an dieser bekannten Schaltsperreinrichtung ist, dass die betreffenden Sperrglieder bzw. Sperrbleche bei vertretbarem Raumbedarf nur für eng nebeneinanderliegende Schaltstangen geeignet sind. Des weiteren führt eine Abstützung der bei einer Schaltung auftretenden und auf die Sperrbleche wirksamen Querkräfte an gehäusefesten Rippen reibungsbedingt zu erhöhten Schalt- bzw. Stellkräften und zu starkem Verschleiss. Auch ist der Einbau der Sperrbleche und der Schaltstangen aufgrund des gegenseitigen Eingriffs schwierig und aufwendig.

Es ergibt sich daher das Problem, eine Schaltsperrvorrichtung aufzuzeigen, die für ein Kraftfahrzeuggetriebe mit entfernt voneinander angeordneten Schaltstangen geeignet, platzsparend ausgebildet, einfach montierbar, und reibungsarm wirksam ist.

Das Problem wird erfindungsgemäß in Verbindung mit dem Oberbegriff des Anspruches 1 dadurch gelöst, dass das Sperrelement als drehbar gelagerte Sperrwelle mit mindestens zwei Sperrnocken ausgebildet ist, und dass die Sperrnocken derart ausgebildet und in Umfangsrichtung um einen Versatzwinkel versetzt zueinander an der Sperrwelle angeordnet sind, dass wechselweise durch eine zum Einlegen eines Gangs dienende Axialverschiebung der einen Schaltstange die eine Sperrnocke aus einer Sperrmulde der einen Schaltstange drückbar und die Sperrwelle dadurch derart drehbar ist, dass die andere Sperrnocke zur Sperrung mindestens eines der anderen Schaltstange zugeordneten anderen Gangs in eine Sperrmulde der anderen Schaltstange in Eingriff bringbar ist.

Vorteilhafte Ausgestaltungen der erfindungsgemäßen Schaltsperrvorrichtung sind in den Ansprüchen 2 bis 11 angegeben.

Durch die Ausbildung als eine um ihre Längsachse drehbare Sperrwelle ist das Sperrelement relativ kompakt und benötigt im Gegensatz zu den bekannten Schaltsperrvorrichtungen, die Platz für einen Schwenkbereich erfordern, keinen zusätzlichen Bauraum für ihren Bewegungsbereich. Des weiteren ist die Sperrwelle besonders für die Überbrückung einer größeren Distanz geeignet, die z.B. bei einem Doppelkupplungsgetriebe mit zwei Abtriebswellen zwischen zwei Schaltstangen eines mit beiden Abtriebswellen in Verbindung stehenden Teilgetriebes vorkommen kann. Auch ist bei der erfindungsgemäßen Schaltsperrvorrichtung keine Abstützung der als Querkräfte auf das Sperrelement wirksamen Sperrkräfte an gehäusefesten Bauteilen, wie Rippen und Stegen, erforderlich, da auftretende Querkräfte von der Lagerung der Sperrwelle aufgenommen werden. Somit wird zusätzlicher Bauraum für andere Zwecke freigehalten und ein reibungsarmer Betrieb ermöglicht. Die Sperrwelle ist unabhängig von den zugeordneten Schaltstangen montierbar, so dass die Montage der Schaltstangen und der Schaltsperrvorrichtung im Vergleich zu den bekannten Schaltsperrvorrichtungen vereinfacht ist. Darüber hinaus ist die Fertigung der Sperrwelle, insbesondere der Sperrnocken, und der Sperrmulden relativ preiswert, da keine hohen Anforderungen an die Passungsgenauigkeit gestellt werden, und Passungsspiele zwischen den Sperrnocken und den Flächen der Sperrmulden von bis zu einem Millimeter zulässig sind, ohne das unbeabsichtigte Einlegen eines Gangs zu ermöglichen.

Zur Unterstützung der Drehbewegung der Sperrwelle, die ausgehend von einer axialen Schaltbewegung einer der zugeordneten Schaltstangen jeweils entgegengesetzt erfolgt, können die Sperrnocken in Bezug auf eine jeweils radiale, die Drehachse der Sperrwelle schneidende Nockenachse entgegengerichtet asymmetrisch an der Sperrwelle angeordnet sein.

Alternativ oder zusätzlich ist es auch möglich, dass die Sperrnocken hierzu in Bezug auf die jeweilige Nockenachse entgegengerichtet asymmetrisch ausgebildet sind, und dass die Sperrmulden korrespondierende asymmetrisch ausgebildete Steuerflächen aufweisen.

Um eine in beiden Bewegungsrichtungen einer der Schaltstangen jeweils annähernd gleich große Belastung in den Kontaktflächen zwischen der jeweiligen Sperrnocke und der zugeordneten Sperrmulde zu erzeugen, weisen die Sperrnocken in Bezug auf den Versatzwinkelsektor bevorzugt flache Aussenflanken und die Sperrmulden korrespondierende flache äußere Steuerflächen auf. Zusätzlich oder alternativ dazu können die Sperrnocken in Bezug auf den Versatzwinkelsektor steile Innenflanken und die Sperrmulden korrespondierende steile innere Steuerflächen aufweisen.

Zur Wechselwirkung mit einer weiteren Schaltstange kann mindestens eine Sperrnocke zum Eingriff in zwei benachbarte Schaltstangen verlängert ausgebildet sein, was beispielsweise zur zusätzlichen Sperrung des bei einem Doppelkupplungsgetriebe dem anderen Teilgetriebe zugeordneten Rückwärtsgangs genutzt werden kann.

Auch kann eine Sperrmulde einer Schaltstange, der zwei Gänge zugeordnet sind, zur einseitigen Sperrwirkung, d.h. zur Sperrung nur eines der zwei Gänge, verbreitert ausgebildet sein.

Zur einfachen und preisgünstigen Befestigung und Lagerung der Sperrwelle in einem Getriebegehäuse, weist die Sperrwelle an ihren Enden vorteilhaft jeweils eine Axialbohrung auf und ist mittels in die Axialbohrungen eingreifenden Stiftschrauben drehbar zwischen zwei Gehäusewänden des Getriebegehäuses befestigt und gelagert. Die Stiftschrauben weisen jeweils in Kopfnähe ein Gewinde und aussen einen Lagerstift auf und sind zur Befestigung und Lagerung der Sperrwelle in einfacher Weise von aussen in entsprechende Gewindebohrungen der Gehäusewände einschraubbar.

Insbesondere bei Verwendung der erfindungsgemäßen Schaltsperrvorrichtung in einem Doppelkupplungsgetriebe mit jeweils zwei Schaltstangen pro Teilgetriebe, sind mindestens zwei unabhängig voneinander wirksame Sperrwellen vorhanden, die bevorzugt platzsparend koaxial zueinander angeordnet sind.

Hierzu kann eine mit inneren Sperrnocken versehene innere Sperrwelle hohl ausgebildet und auf einer mit äußeren Sperrnocken versehenen äußeren Sperrwelle drehbar gelagert sein.

Um eine Wechselwirkung der inneren Sperrwelle mit einer äußeren Schaltstange zu ermöglichen, kann mindestens eine der inneren Sperrnocken mittels eines Kragarms aussen wirksam an der inneren Sperrwelle angeordnet sein.

Weitere Einzelheiten der Erfindung ergeben sich aus der nachfolgenden ausführlichen Beschreibung und den beigefügten Zeichnungen, die beispielhaft zur Erläuterung der erfindungsgemäßen Schaltsperrvorrichtung dienen.

Hierzu zeigen:
- Figur 1: eine erfindungsgemäße Schaltsperrvorrichtung mit Bauteilen eines Doppelkupplungsgetriebes in einer ersten Schalt- bzw. Sperrposition in perspektivischer Darstellung,
- Figur 2: die erfindungsgemäße Schaltsperrvorrichtung nach Fig. 1 in einer zweiten Schalt- bzw. Sperrposition in perspektivischer Darstellung,
- Figur 3: die erfindungsgemäße Schaltsperrvorrichtung nach Fig. 1 in der ersten Schalt- bzw. Sperrposition in einer Draufsicht,
- Figur 4: zwei koaxial angeordnete Sperrwellen in perspektivischer Darstellung, und
- Figur 5: vier mit den Sperrwellen nach Fig. 4 korrespondierende Schaltstangen eines Doppelkupplungsgetriebes in perspektivischer Darstellung.

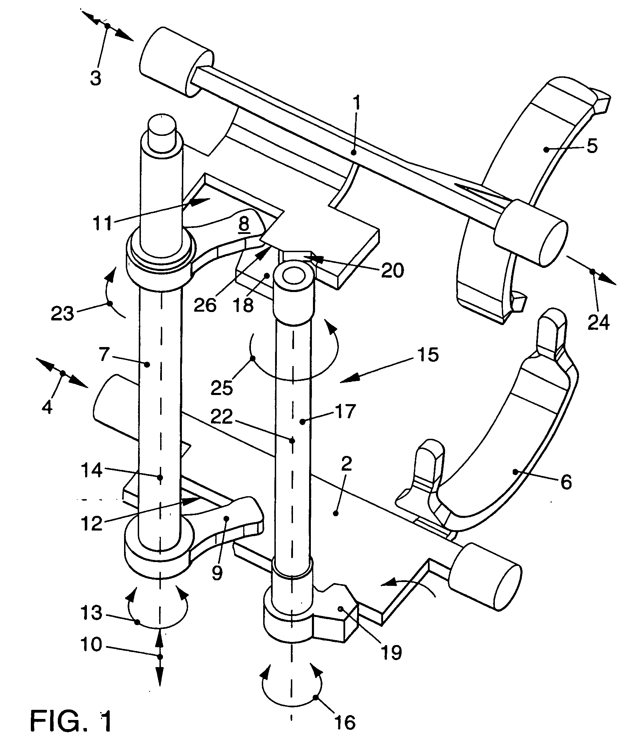

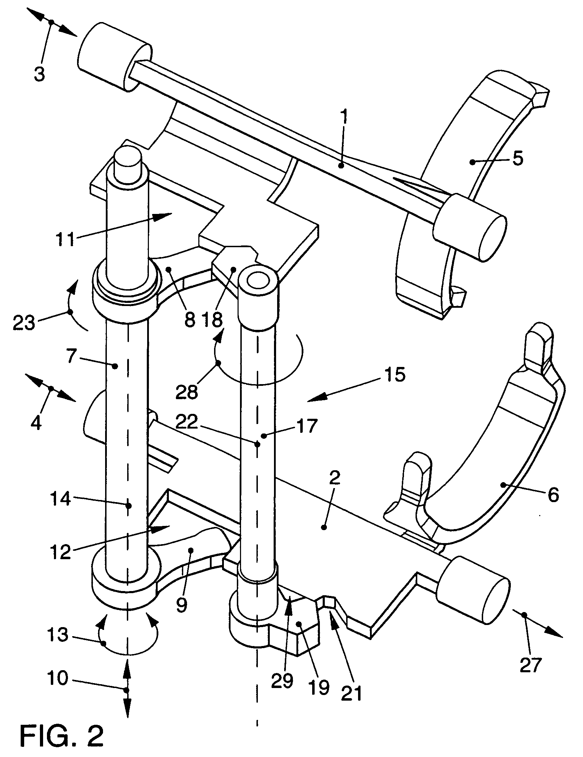

In Fig. 1 und Fig. 2 sind zwei parallel angeordnete Schaltstangen 1, 2 dargestellt, die einem gemeinsamen Teilgetriebe eines Doppelkupplungsgetriebes zugehörig sind. Jeder der beiden Schaltstangen 1, 2 sind zwei Gänge zugeordnet, die jeweils durch eine Axialverschiebung 3, 4 der Schaltstangen 1, 2 über Schaltgabeln 5, 6, die mit nicht abgebildeten Schaltmuffen in Eingriff stehen, ein- und auslegbar sind. Zur Ansteuerung der Schaltstangen 1, 2 ist eine Schaltwelle 7 vorgesehen, die zwei Schaltfinger 8, 9 aufweist, welche in einem Wählvorgang zur Kopplung mit der entsprechenden Schaltstange 1, 2 durch eine Axialverschiebung 10 der Schaltwelle 7 wechselweise in eine Kopplungsmulde 11, 12 einer der Schaltstangen 1, 2 einführbar ist. Das Ein- und Auslegen der Gänge erfolgt dann durch eine Drehung 13 der Schaltwelle 7 um ihre Längsachse 14, wodurch die jeweils mit der Schaltwelle 7 in Verbindung stehende Schaltstange 1,2 axial 3, 4 verschoben wird. Um das gleichzeitige Einlegen je eines Gangs der beiden Schaltstangen 1, 2 zu vermeiden, ist eine Schaltsperrvorrichtung 15 vorgesehen, die aus einer drehbar 16 gelagerten Sperrwelle 17 mit zwei Sperrnocken 18, 19 und korrespondierenden, in den Schaltstangen 1, 2 angeordneten Sperrmulden 20, 21 besteht. Bei einer schaltungsbedingten Verschiebung 3, 4 einer der Schaltstangen 1, 2 wird die zugeordnete Sperrnocke 18, 19 derart aus der zugeordneten Sperrmulde 20, 21 gedrückt, dass die Sperrwelle 17 um ihre Längsachse 22 gedreht 16 wird, und die andere Sperrnocke 18, 17 durch die Drehung 16 der Sperrwelle 17 in die andere Sperrmulde 21, 20 in Eingriff gebracht wird, wodurch die andere Schaltstange 2, 1 in ihrer Neutralposition formschlüssig gegen eine Axialverschiebung 4, 3 gesichert ist.

In der Darstellung von Fig. 1 ist die Schaltwelle 7 über den ersten Schaltfinger 8 mit der ersten Schaltstange 1 gekoppelt. Durch eine erfolgte Drehung 13 der Schaltwelle 7 im Uhrzeigersinn 23 ist die erste Schaltstange 1 in einem Schaltvorgang nach rechts 24 verschoben 3 worden, wodurch der betreffende Gang eingelegt ist. Durch die Axialverschiebung 3 der ersten Schaltstange 1 ist die erste Sperrnocke 18 aus der zugeordneten Sperrmulde 20 herausgedrückt und die Sperrwelle 17 im Gegenuhrzeigersinn 25 gedreht 16 worden. Hierdurch ist die zweite Sperrnocke 19 in die zugeordnete Sperrmulde 21 der zweiten Schaltstange 2 in Eingriff gebracht worden. Da die Sperrwelle 17 aufgrund eines Kontaktes der ersten Sperrnocke 18 mit einer Sperrfläche 26 der ersten Schaltstange 1 nicht zurückgedreht werden kann, ist die zweite Schaltstange 2 in ihrer Neutralposition formschlüssig arretiert und das Einlegen eines der zweiten Schaltstange 2 zugeordneten Gangs unmöglich.

Zur Verdeutlichung der Funktionsweise der erfindungsgemäßen Schaltsperrvorrichtung 15 sind die Bauteile von Fig. 1 in Fig. 2 in einer alternativen Schalt- und Sperrposition dargestellt. Die Schaltwelle 7 ist nun über den zweiten Schaltfinger 9 mit der zweiten Schaltstange 2 gekoppelt. Durch eine erfolgte Drehung 13 der Schaltwelle 7 im Uhrzeigersinn 23 ist die zweite Schaltstange 2 in einem Schaltvorgang nach rechts 27 verschoben 4 worden, wodurch der betreffende Gang eingelegt ist. Durch die Axialverschiebung 4 der zweiten Schaltstange 2 ist die zweite Sperrnocke 19 aus der zugeordneten Sperrmulde 21 herausgedrückt und die Sperrwelle 17 im Uhrzeigersinn 28 gedreht 16 worden. Hierdurch ist die erste Sperrnocke 18 in die zugeordnete Sperrmulde 20 der ersten Schaltstange 1 in Eingriff gebracht worden, so dass aufgrund eines Kontaktes der zweiten Sperrnocke 19 mit einer Sperrfläche 29 der zweiten Schaltstange 2 jetzt die erste Schaltstange 1 in ihrer Neutralposition formschlüssig arretiert und das Einlegen eines dieser Schaltstange 1 zugeordneten Gangs sicher verhindert ist.

Durch die Ausbildung der Schaltsperrvorrichtung 15 als eine drehbare Sperrwelle 17 mit wechselweise in Sperrmulden 20, 21 in Eingriff bringbaren Sperrnocken 18, 19 ist diese im Vergleich zu bekannten Schaltsperrvorrichtungen besonders platzsparend ausgebildet, reibungsarm wirksam, einfach montierbar, und zur Wechselwirkung zwischen entfernt voneinander angeordneten Schaltstangen 1, 2 geeignet.

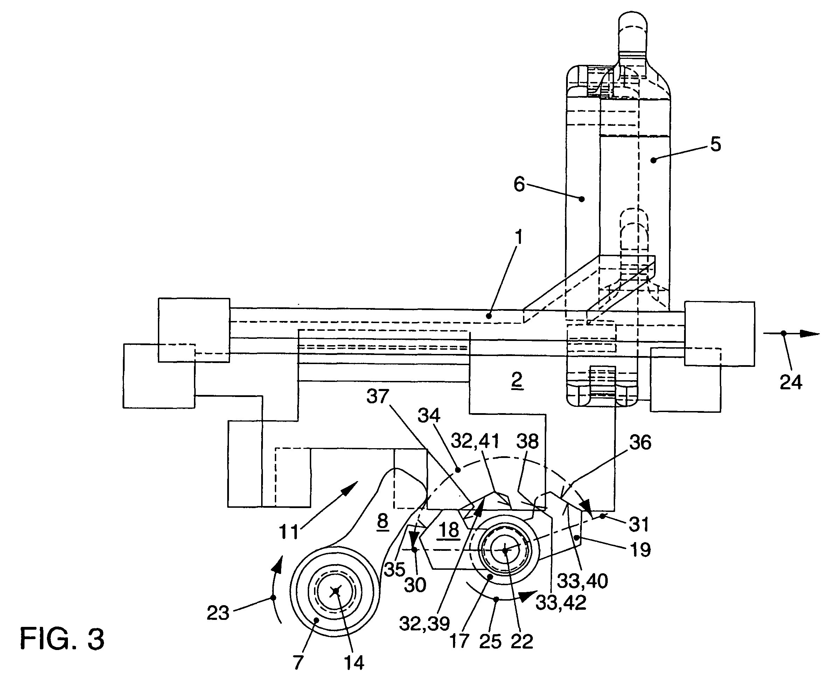

Zur weiteren Erläuterung von beispielhaften Details der erfindungsgemäßen Schaltsperrvorrichtung 15 sind die Bauteile von Fig. 1 in derselben Schalt- und Sperrposition in Fig. 3 in einer Draufsicht dargestellt. Es ist erkennbar, dass die Sperrnocken 18, 19 in Bezug auf eine jeweils radiale, die Drehachse 22 der Sperrwelle 17 schneidende Nockenachse 30, 31 entgegengerichtet asymmetrisch an der Sperrwelle 17 angeordnet sind. Des weiteren wird deutlich, dass die Sperrnocken 18, 19 in Bezug auf die jeweilige Nockenachse 30, 31 entgegengerichtet asymmetrisch ausgebildet sind, und dass die Sperrmulden 20, 21 korrespondierende asymmetrisch ausgebildete Steuerflächen 32, 33 aufweisen. Die asymmetrische Ausbildung der Sperrnocken 18, 19 und der Sperrmulden 20, 21 ist im vorliegenden Fall dadurch realisiert, dass die Sperrnocken 18, 19 bezogen auf ihren Versatzwinkelsektor 34 mit flachen Aussenflanken 35, 36 und steilen Innenflanken 37, 38 und die Sperrmulden 20, 21 mit korrespondierenden flachen äußeren Steuerflächen 39, 40 und steilen inneren Steuerflächen 41, 42 versehen sind. Durch die beschriebene Ausbildung und Anordnung der Sperrnocken 18, 19 und der Sperrmulden 20, 21 wird die jeweils gegenläufig erfolgende Drehbewegung 16 der Sperrwelle 17 unterstützt, und bei einer Axialverschiebung 3, 4 der Schaltstangen 1, 2 in beide Richtungen jeweils eine annähernd gleich große Belastung in den Kontaktflächen 35, 39; 36, 40; 37, 41; 38, 42 der Sperrnocken 18, 19 und der Sperrmulden 20, 21 bewirkt.

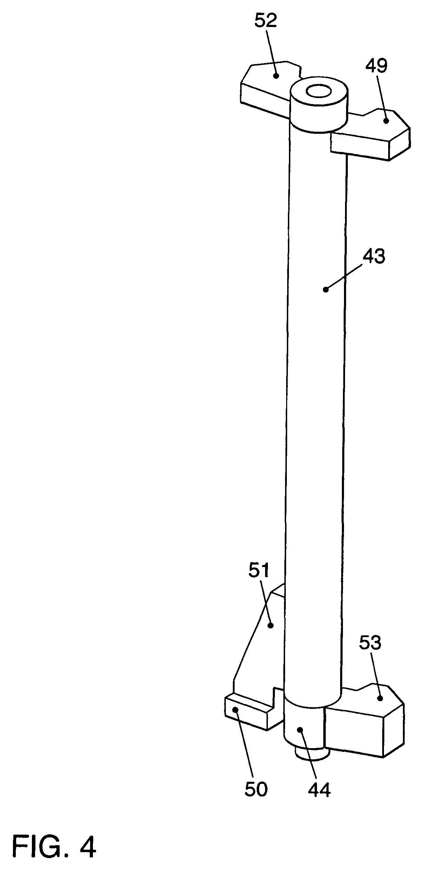

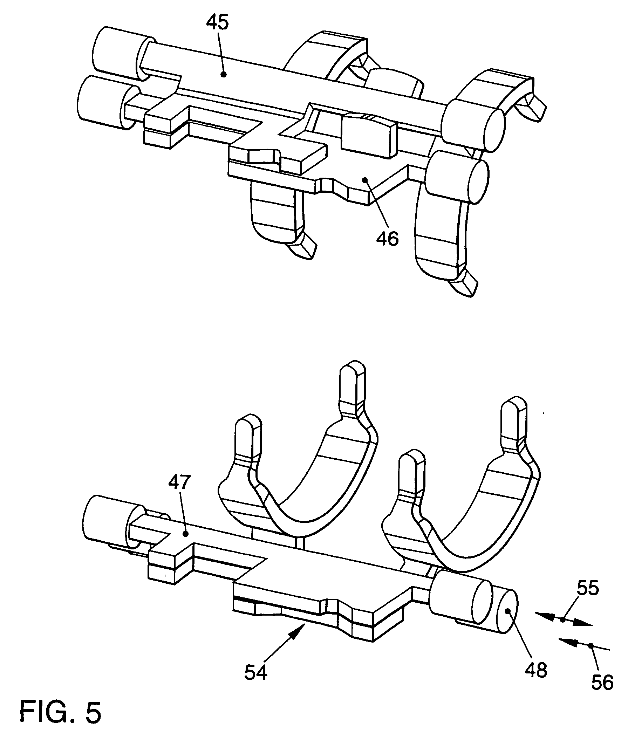

In Fig. 4 sind zwei koaxial angeordnete Sperrwellen 43, 44 abgebildet. Zur besseren Übersichtlichkeit sind die mit diesen Sperrwellen 43, 44 korrespondierenden Schaltstangen 45, 46, 47, 48 getrennt in Fig. 5 dargestellt, wobei die obere äußere und die untere innere Schaltstange 45, 47 und die obere innere und die untere äußere Schaltstange 46, 48 jeweils einem Teilgetriebe eines Doppelkupplungsgetriebes zugeordnet sind. Die innere Sperrwelle 43 ist hohl ausgebildet und drehbar auf der äußeren Sperrwelle 44 gelagert, und somit unabhängig von dieser betreibbar. Auch ist die innere Sperrwelle 43 mit zwei inneren Sperrnocken 49, 50 versehen, von denen die untere innere Sperrnocke 50 zur Wechselwirkung mit der unteren äußeren Schaltstange 48 über einen Kragarm 51 nach aussen geführt ist. Die äußere Sperrwelle 44 weist zwei äußere Sperrnocken 52, 53 auf, von denen die untere äußere Sperrnocke 53 zur Wechselwirkung mit den zwei benachbarten unteren Schaltstangen 47, 48 verlängert ausgebildet ist. Durch eine verbreiterte Ausbildung der Sperrmulde 54 der unteren äußeren Schaltstange 48 wird erreicht, dass die untere äußere Sperrnocke 53 der äußeren Sperrwelle 44 diese nur einseitig, d.h. gegen eine schaltungsbedingte Axialverschiebung 55 nach links 56 sichert. Dies kann beispielsweise dazu genutzt werden, dass bei einem geschalteten Gang der oberen äußeren Schaltstange 45 zusätzlich zu den Gängen der unteren inneren Schaltstange 47 ein der unteren äußeren Schaltstange 48 zugeordneter Gang gesperrt wird, der beispielsweise der Rückwärtsgang sein kann. Dagegen kann der andere der unteren äußeren Schaltstange 48 zugeordnete Gang eingelegt werden. In der Kombination der in Fig. 4 und Fig. 5 dargestellten Schaltstangen 45, 46, 47, 48 und Sperrwellen 43, 44 ist eine raumsparende Schaltsperrvorrichtung realisiert, die besonders für ein Doppelkupplungsgetriebe geeignet ist, das zur Erreichung einer für einen Quereinbau der Antriebseinheit besonders geeigneten kurzen Baulänge zwei mit beiden Teilgetrieben in Wirkverbindung stehende Abtriebswellen aufweist, d.h. bei dem jedem Teilgetriebe jeweils zwei entfernt voneinander, jeweils in der Nähe der Abtriebswellen angeordnete Schaltstangen 45, 47; 46, 48 zugeordnet sind.

### BEZUGSZEICHENLISTE

- 1: (erste) Schaltstange
- 2: (zweite) Schaltstange
- 3: Axialverschiebung
- 4: Axialverschiebung
- 5: Schaltgabel
- 6: Schaltgabel
- 7: Schaltwelle
- 8: (erster) Schaltfinger
- 9: (zweiter) Schaltfinger
- 10: Axialverschiebung
- 11: Kopplungsmulde
- 12: Kopplungsmulde
- 13: Drehung
- 14: Längsachse
- 15: Schaltsperrvorrichtung
- 16: Drehung
- 17: Sperrwelle
- 18: Sperrnocke
- 19: Sperrnocke
- 20: Sperrmulde
- 21: Sperrmulde
- 22: Drehachse, Längsachse
- 23: Uhrzeigersinn
- 24: (nach) rechts
- 25: Gegenuhrzeigersinn
- 26: Sperrfläche
- 27: (nach) rechts
- 28: Uhrzeigersinn
- 29: Sperrfläche
- 30: Nockenachse
- 31: Nockenachse
- 32: Steuerfläche
- 33: Steuerfläche
- 34: Versatzwinkel (sektor)
- 35: Aussenflanke
- 36: Aussenflanke
- 37: Innenflanke
- 38: Innenflanke
- 39: äußere Steuerfläche
- 40: äußere Steuerfläche
- 41: innere Steuerfläche
- 42: innere Steuerfläche
- 43: (innere) Sperrwelle
- 44: (äußere) Sperrwelle
- 45: (obere äußere) Schaltstange
- 46: (obere innere) Schaltstange
- 47: (untere innere) Schaltstange
- 48: (untere äußere) Schaltstange
- 49: (obere innere) Sperrnocke
- 50: (untere innere) Sperrnocke
- 51: Kragarm
- 52: (obere äußere) Sperrnocke
- 53: (untere äußere) Sperrnocke
- 54: Sperrmulde
- 55: Axialverschiebung
- 56: (nach) links

## Patentansprüche

1. Schaltsperrvorrichtung, insbesondere zur Gangschaltsperrung mechanisch schaltbarer Kraftfahrzeuggetriebe, mit einem formschlüssig wirksamen Sperrelement, das durch eine durch das Einlegen eines Gangs bedingte Wechselwirkung mit einer Steuerfläche einer dem Gang zugeordneten Schaltstange (1) zur Sperrung mindestens eines einer anderen Schaltstange (2) zugeordneten anderen Gangs in eine Vertiefung der anderen Schaltstange (2) in Eingriff bringbar ist, **dadurch gekennzeichnet, dass** das Sperrelement als drehbar gelagerte Sperrwelle (17) mit mindestens zwei Sperrnocken (18, 19) ausgebildet ist, und dass die Sperrnocken (18, 19) derart ausgebildet und in Umfangsrichtung um einen Versatzwinkel (34) versetzt zueinander an der Sperrwelle (17) angeordnet sind, dass wechselweise durch eine zum Einlegen eines Gangs dienende Axialverschiebung (3) der einen Schaltstange (1) die eine Sperrnocke (18) aus einer Sperrmulde (20) der einen Schaltstange (1) drückbar und die Sperrwelle (17) **dadurch** derart drehbar (16) ist, dass die andere Sperrnocke (19) zur Sperrung mindestens eines der anderen Schaltstange (2) zugeordneten anderen Gangs in eine Sperrmulde (21) der anderen Schaltstange (2) in Eingriff bringbar ist.

2. Schaltsperrvorrichtung nach Anspruch 1, **dadurch gekennzeichnet, dass** die Sperrnocken (18, 19) in Bezug auf eine jeweils radiale, die Drehachse (22) der Sperrwelle (17) schneidende Nockenachse (30, 31) entgegengerichtet asymmetrisch an der Sperrwelle (17) angeordnet sind.

3. Schaltsperrvorrichtung nach Anspruch 1 oder 2, **dadurch gekennzeichnet, dass** die Sperrnocken (18, 19) in Bezug auf die jeweilige Nockenachse (30, 31) entgegengerichtet asymmetrisch ausgebildet sind, und dass die Sperrmulden (20, 21) korrespondierende asymmetrisch ausgebildete Steuerflächen (32, 33) aufweisen.

4. Schaltsperrvorrichtung nach Anspruch 3, **dadurch gekennzeichnet, dass** die Sperrnocken (18, 19) in Bezug auf den Versatzwinkelsektor (34) flache Aussenflanken (35, 36) und die Sperrmulden (20, 21) korrespondierende flache äußere Steuerflächen (39, 40) aufweisen.

5. Schaltsperrvorrichtung nach Anspruch 3 oder 4, **dadurch gekennzeichnet, dass** die Sperrnocken (18, 19) in Bezug auf den Versatzwinkelsektor (34) steile Innenflanken (37, 38) und die Sperrmulden (20, 21) korrespondierende steile innere Steuerflächen (41, 42) aufweisen.

6. Schaltsperrvorrichtung nach einem der Ansprüche 1 bis 5, **dadurch gekennzeichnet, dass** mindestens eine Sperrnocke (53) zum Eingriff in zwei benachbarte Schaltstangen (47, 48) verlängert ausgebildet ist.

7. Schaltsperrvorrichtung nach einem der Ansprüche 1 bis 6, **dadurch gekennzeichnet, dass** mindestens eine Sperrmulde (54) einer Schaltstange (48) zur einseitigen Sperrwirkung verbreitert ausgebildet ist.

8. Schaltsperrvorrichtung nach einem der Ansprüche 1 bis 7, **dadurch gekennzeichnet, dass** die Sperrwelle (17) an ihren Enden jeweils eine Axialbohrung aufweist und mittels in die Axialbohrungen eingreifenden Stiftschrauben drehbar zwischen zwei Gehäusewänden befestigt und gelagert ist.

9. Schaltsperrvorrichtung nach einem der Ansprüche 1 bis 8, **dadurch gekennzeichnet, dass** mindestens zwei unabhängig voneinander wirksame Sperrwellen (43, 44) koaxial zueinander angeordnet sind.

10. Schaltsperrvorrichtung nach Anspruch 9, **dadurch gekennzeichnet, dass** eine mit inneren Sperrnocken (49, 50) versehene innere Sperrwelle (43) hohl ausgebildet und auf einer mit äußeren Sperrnocken (52, 53) versehenen äußeren Sperrwelle (44) drehbar gelagert ist.

11. Schaltsperrvorrichtung nach Anspruch 10, **dadurch gekennzeichnet, dass** mindestens eine der inneren Sperrnocken (50) mittels eines Kragarms (51) aussen wirksam an der inneren Sperrwelle (43) angeordnet ist.

## Claims

1. Shift lock mechanism, especially for the gear shift locking of mechanically lockable motor vehicle gearing, having a positively interlocking element, which through an interaction, brought about by the engagement of a gear, with a control face of a gearshift rod (1) assigned to the gear can be made to engage in a depression in another gearshift rod (2) for locking at least one other gear assigned to the other gearshift rod (2), **characterized in that** the interlocking element takes the form of a rotatably supported locking shaft (17) having at least two locking cams (18, 19), and that the locking cams (18, 19) are designed and are arranged on the locking shaft (17), circumferentially staggered by an offset angle (34), in such a way that an axial displacement (3) of the one gearshift rod (1) serving for the engagement of a gear alternately allows the one locking cam (18) to be forced out of a locking recess (20) in the one gearshift rod (1), thereby allowing the locking shaft (17) to be rotated (16) in such a way that the other locking cam (19) can be made to engage in a locking recess (21) in the other gearshift rod (2) for locking at least one other gear assigned to the other gearshift rod (2).

2. Shift lock mechanism according to Claim 1, **characterized in that** the locking cams (18, 19) are arranged on the locking shaft (17) so that they are each asymmetrically opposed in relation to a respective radial cam axis (30, 31) intersecting the axis of rotation (22) of the locking shaft (17).

3. Shift lock mechanism according to Claim 1 or 2, **characterized in that** the locking cams (18, 19) are asymmetrically opposed in relation to the respective cam axis (30, 31) and that the locking recesses (20, 21) have corresponding asymmetrically formed control faces (32, 33).

4. Shift lock mechanism according to Claim 3, **characterized in that** the locking cams (18, 19) have shallow outer flanks (35, 36) in relation to the offset angle sector (34) and the locking recesses (20, 21) have corresponding shallow outer control faces (39, 40).

5. Shift lock mechanism according to Claim 3 or 4, **characterized in that** the locking cams (18, 19) have steep inner flanks (37, 38) in relation to the offset angle sector (34) and the locking recesses (20, 21) have corresponding steep inner control faces (41, 42).

6. Shift lock mechanism according to any one of Claims 1 to 5, **characterized in that** at least locking cam (53) is of extended design shape for engagement in two adjacent gearshift rods (47, 48).

7. Shift lock mechanism according to any one of Claims 1 to 6, **characterized in that** at least one locking recess (54) in a gearshift rod (48) is of widened design shape for the unilateral locking action.

8. Shift lock mechanism according to any one of Claims 1 to 7, **characterized in that** the locking shaft (17) has an axial bore at each of its ends and is rotatably fixed and supported between two housing walls by means of studs engaging in the axial bores.

9. Shift lock mechanism according to any one of Claims 1 to 8, **characterized in that** at least two locking shafts (43, 44) acting independently of one another are arranged coaxially with one another.

10. Shift lock mechanism according to Claim 9, **characterized in that** an inner locking shaft (43) provided with inner locking cams (49, 50) is of hollow design and is supported so that it can rotate on an outer locking shaft (44) provided with outer locking cams (52, 53).

11. Shift lock mechanism according to Claim 10, **characterized in that** at least one of the inner locking cams (50) is arranged so that it acts on the inner locking shaft (43) by means of a projecting arm (51).

## Revendications

1. Mécanisme de verrouillage pour commande de changement de vitesse, notamment pour le verrouillage de changement de vitesse de boîtes de vitesses de véhicules automobiles à transmission mécanique, comprenant un élément de verrouillage agissant par engagement par coopération de forme, qui peut venir en prise, par interaction provoquée par l'enclenchement d'une vitesse, avec une surface de commande d'une tringle de changement de vitesse (1) associée à la vitesse, pour verrouiller au moins une autre vitesse associée à une autre tringle de changement de vitesse (2) dans un renfoncement de l'autre tringle de changement de vitesse (2), **caractérisé en ce que** l'élément de verrouillage est réalisé sous forme d'arbre de verrouillage monté à rotation (17) avec au moins deux cames de verrouillage (18, 19), et **en ce que** les cames de verrouillage (18, 19) sont réalisées et sont disposées sur l'arbre de verrouillage (17) de manière décalée l'une par rapport à l'autre d'un angle de décalage (34) dans la direction périphérique, de telle sorte que de manière sélective, par un déplacement axial (3) de l'une (1) des tringles de changement de vitesse servant à enclencher une vitesse, l'une (18) des cames de verrouillage puisse être pressée hors d'un creux de verrouillage (20) de ladite une tringle de changement de vitesse (1), et que l'arbre de verrouillage (17) puisse être tourné (16) de ce fait de telle sorte que l'autre came de verrouillage (19) puisse être amenée en prise dans un creux de verrouillage (21) de l'autre tringle de changement de vitesse (2) pour le verrouillage d'au moins une autre vitesse associée à l'autre tringle de changement de vitesse (2).

2. Mécanisme de verrouillage pour commande de changement de vitesse selon la revendication 1, **caractérisé en ce que** les cames de verrouillage (18, 19) sont disposées asymétriquement sur l'arbre de verrouillage (17) de manière opposée par rapport à un axe de came respectif radial (30, 31) coupant l'axe de rotation (22) de l'arbre de verrouillage (17).

3. Mécanisme de verrouillage pour commande de changement de vitesse selon la revendication 1 ou 2, **caractérisé en ce que** les cames de verrouillage (18, 19) sont réalisées asymétriquement de manière opposée par rapport à l'axe de came respectif (30, 31), et **en ce que** les creux de verrouillage (20, 21) présentent des faces de commande correspondantes (32, 33) réalisées asymétriquement.

4. Mécanisme de verrouillage pour commande de changement de vitesse selon la revendication 3, **caractérisé en ce que** les cames de verrouillage (18, 19) présentent, par rapport au secteur angulaire de décalage (34), des flancs extérieurs plats (35, 36) et les creux de verrouillage (20, 21) présentent des surfaces de commande extérieures plates correspondantes (39, 40).

5. Mécanisme de verrouillage pour commande de changement de vitesse selon la revendication 3 ou 4, **caractérisé en ce que** les cames de verrouillage (18, 19) présentent, par rapport au secteur angulaire de décalage (34), des flancs intérieurs raides (37, 38) et les creux de verrouillage (20, 21) présentent des surfaces de commande intérieures raides correspondantes (41, 42).

6. Mécanisme de verrouillage pour commande de changement de vitesse selon l'une quelconque des revendications 1 à 5, **caractérisé en ce qu'**au moins une came de verrouillage (53) est réalisée avec une prolongation pour venir en prise dans deux tringles de changement de vitesse voisines (47, 48).

7. Mécanisme de verrouillage pour commande de changement de vitesse selon l'une quelconque des revendications 1 à 6, **caractérisé en ce qu'**au moins un creux de verrouillage (54) d'une tringle de changement de vitesse (48) est réalisé de manière élargie en vue d'un effet de verrouillage unilatéral.

8. Mécanisme de verrouillage pour commande de changement de vitesse selon l'une quelconque des revendications 1 à 7, **caractérisé en ce que** l'arbre de verrouillage (17) présente à ses extrémités à chaque fois un alésage axial et est fixé et monté de manière rotative entre deux parois de carter au moyen de goujons filetés venant en prise dans les alésages axiaux.

9. Mécanisme de verrouillage pour commande de changement de vitesse selon l'une quelconque des revendications 1 à 8, **caractérisé en ce qu'**au moins deux arbres de verrouillage (43, 44) agissant indépendamment l'un de l'autre sont disposés coaxialement l'un à l'autre.

10. Mécanisme de verrouillage pour commande de changement de vitesse selon la revendication 9, **caractérisé en ce qu'**un arbre de verrouillage interne (43) pourvu de cames de verrouillage internes (49, 50) est réalisé avec une structure creuse et est monté à rotation sur un arbre de verrouillage externe (44) pourvu de cames de verrouillage externes (52, 53).

11. Mécanisme de verrouillage pour commande de changement de vitesse selon la revendication 10, **caractérisé en ce qu'**au moins l'une des cames de verrouillage internes (50) est disposée au moyen d'un bras en porte-à-faux (51) de manière active à l'extérieur sur l'arbre de verrouillage interne (43).
